(19) Europäisches Patentamt / European Patent Office / Office européen des brevets

(11) **EP 4 498 635 A1**

(12) **DEMANDE DE BREVET EUROPEEN**

(43) Date de publication:
**29.01.2025 Bulletin 2025/05**

(21) Numéro de dépôt: **23075002.8**

(22) Date de dépôt: **25.07.2023**

(51) Classification Internationale des Brevets (IPC):
*H04L 9/08* *(2006.01)*

(52) Classification Coopérative des Brevets (CPC):
**H04L 9/085; H04L 9/0863; H04L 9/0869; H04L 9/0894;** H04L 9/50

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **Crypto Key Guardian**
**1380 Lasne (BE)**

(72) Inventeurs:
• **Libon, Olivier Jean René**
  **1310 La Hulpe (BE)**
• **Dorchy, Hugues Georges Henri**
  **1050 Ixelles (BE)**

(74) Mandataire: **Gevers Patents**
**De Kleetlaan 7A**
**1831 Diegem (BE)**

Remarques:
Revendications modifiées conformément à la règle 137(2) CBE.

(54) **PROCÉDÉ CRYPTOGRAPHIQUE DE GESTION D'UNE PHRASE DE MOTS**

(57) L'invention concerne un procédé de cryptographie d'une phrase (1) de mots (11) comprenant la génération de parties (2) de la phrase (1), leur codage sous forme de codes-barres (3), la production de ces codes-barres (3) sur des supports (41-44) physiques et/ou informatiques, et la dissémination de ces supports (41-44) en plusieurs emplacements (51-54). L'invention concerne également un procédé de détermination d'une phrase (1) de mots (11) cryptographiée au moyen du procédé de cryptographie susmentionné.

Figure 1

EP 4 498 635 A1

## Description

**Domaine technique**

L'invention concerne un procédé de cryptographie d'une phrase de mots.

**Art antérieur**

Il est devenu courant d'utiliser des clés privées pour accéder à des données numériques au sein d'une chaîne de blocs, par exemple des données associées à un compte de cryptomonnaies. Les clés privées sont généralement regroupées en un seul mot de passe se présentant sous la forme d'une phrase de mots appelée « *seed phrase* ». Cette phrase peut alors être utilisée pour accéder aux données, en particulier comme clé privée et/ou comme outil de récupération ou de restauration des clés privées.

Cette phrase doit être conservée dans le secret le plus absolu pour éviter un vol des données (et des cryptomonnaies le cas échéant). En effet, tout tiers ayant accès à cette phrase possède au final ces données. Il est donc peu recommandé de confier cette phrase à un tiers.

Comme cette phrase comprend typiquement un grand nombre de mots, en général 24 mots dans le cas des applications en cryptomonnaies, il est complexe et hautement risqué de la mémoriser sans le support physique et/ou informatique (hardware, feuille de papier, etc.). En effet, en cas d'oubli, par exemple, consécutif à un accident ou à une maladie, ou en cas de décès, les données peuvent devenir définitivement inaccessibles.

Si la phrase est produite sur support physique non informatique, tel qu'une écriture sur une feuille de papier ou une gravure sur un matériau résistant, il existe un risque de perte, de dégradation et/ou destruction du support. En outre, il peut être aisé pour un tiers de voler physiquement ou de copier (par exemple, par une simple photographie) le support.

Si la phrase (et en général les clés privées) sont accessibles en ligne sur un serveur tiers ou un support informatique centralisé tiers, le risque de perte et/ou de destruction est moindre, mais le risque de piratage est considérable. En outre, le contrôle d'accès aux données n'est alors plus garanti car il dépend d'un support informatique et/ou un procédé sur lequel le propriétaire des données n'a au final pas de contrôle total. Ceci est notamment vrai lorsque l'accès se fait via une plateforme de change, de courtage ou d'échange de données (ou, le cas échéant, de cryptomonnaies) laquelle peut faire faillite ou limiter les échanges de données.

Si la phrase (et en général les clés privées) sont accessibles hors ligne sur un support physique et informatique sur lequel le propriétaire a un contrôle total (par exemple, une clé USB ou un disque dur), les risques de perte, de dégradation et/ou destruction, et même de défaillance technique, restent assez élevés.

Outre les difficultés techniques de conservation d'une « *seed phrase* » telles qu'exposées ci-dessus, il existe également un besoin plus général de gestion de cette phrase dans certaines circonstances, par exemple, lors du décès de son propriétaire qui peut rendre l'accès à la phrase impossible pour les héritiers faute d'information à cet égard.

À ce jour, il n'existe aucune solution de conservation et/ou de gestion et/ou de restauration d'une « *seed phrase* » qui ne présente pas les inconvénients exposés ci-dessus.

**Exposé de l'invention**

Un objet de l'invention est de fournir une telle solution. En particulier, un objet de l'invention est de fournir un procédé de cryptographie d'une phrase de mots qui permette de conserver celle-ci de façon contrôlée par son propriétaire, sécurisée et décentralisée, en évitant les dépendances obligatoires à un tiers, et en limitant les risques de perte, dégradation, destruction et/ou défaillance y afférant.

À cet effet, la présente invention propose un procédé de cryptographie d'une phrase de mots mis en oeuvre par ordinateur et comprenant les étapes suivantes :

(i) générer algorithmiquement une pluralité de parties de la phrase telles que la phrase soit déterminable à partir d'une quantité minimale de ces parties ;
(ii) coder chacune des parties sous forme d'un code-barre ;
(iii) produire les codes-barres sur des supports physiques et/ou informatiques ;
(iv) entreposer les supports en plusieurs emplacements, de telle sorte que le ou les codes-barres produits sur le ou les supports entreposés en chacun des emplacements sont, en nombre, strictement inférieur à la quantité minimale.

Le procédé selon l'invention permet de cryptographier une phrase de mots de façon à la conserver de façon sécurisée. La cryptographie est efficace car elle fait intervenir les étapes (i) et (ii) correspondant à une combinaison avantageuse de deux techniques de cryptographie.

La conservation et la gestion de la phrase selon le procédé de l'invention est décentralisée vu qu'elle se fait en plusieurs emplacements distincts. Comme aucun emplacement ne contient suffisamment de codes-barres (et donc d'information) pour déterminer la phrase, aucun tiers ne peut déterminer la phrase à partir d'un seul emplacement.

Le propriétaire de la phase exerce typiquement un contrôle exclusif et unique (« *self-custody* ») sur l'accès à la phrase vu qu'il entrepose les supports en des emplacements qu'il choisit. L'utilisation de plusieurs parties de la phrase permet de limiter les risques de perte, dégradation et/ou destruction. En effet, d'une part, il apparaît peu probable qu'un grand nombre de supports entreposés en différents emplacements soient perdus, dégradés, détruits ou défaillants en même temps. D'autre part, vu qu'une quantité minimale de ces parties suffit pour déterminer la phrase, même si un de ces supports est perdu, dégradé, détruit ou défaillant, il devrait rester possible de déterminer la phrase à partir des autres supports.

L'usage de codes-barres à l'étape (ii) est avantageuse. Les codes-barres sont un moyen de codage connu pour lesquels il existe de nombreux lecteurs librement accessibles sur le marché. Ils sont ainsi accessibles et faciles d'utilisation. En outre, les codes-barres sont suffisamment répandus pour que la présence d'un code-barre sur un support physique lorsqu'il est visible ne suscite pas une convoitise d'un tiers, au contraire d'une liste de 24 mots très facilement reconnaissable comme un code d'accès à un compte de cryptomonnaies. Les codes-barres empêchent aussi à un tiers de déterminer directement (« à l'œil ») une information codée. Enfin, les codes-barres sont faciles et compacts à produire, à stocker et, surtout, à distribuer en plusieurs emplacements, ce qui en fait un codage de choix dans le cadre du procédé selon l'invention.

Les étapes (i) à (iv) sont logiquement exécutées dans cet ordre, les étapes (iii) et (iv) pouvant être exécutées simultanément. Les étapes (i), (ii) et (iv) peuvent être inversées et exécutées dans l'ordre inverse pour restaurer la phrase comme il est exposé ci-après.

De par les termes « procédé mis en oeuvre par ordinateur », le procédé de l'invention implique l'utilisation d'un ordinateur, d'un réseau informatique et/ou d'un autre appareil programmable (par exemple, un smartphone, une tablette; un FPGA, ...) ou programmé (par exemple, un circuit intégré / ASIC, ...) et est tel qu'une ou plusieurs de ses étapes ou caractéristiques sont réalisées totalement ou en partie par un programme d'ordinateur. En particulier, ledit terme « ordinateur » n'est pas à interpréter de façon restrictive comme limitant la mise en oeuvre de la méthode au seul moyen d'un ordinateur physique. L'invention peut être mise en oeuvre par divers moyens de traitement numérique comme un ordinateur, un smartphone, un réseau informatique, un système informatique distribué et/ou un serveur, cette liste étant non limitative.

Le procédé relève donc au moins en partie d'un caractère informatique sous-jacent. Par exemple, les étapes (i) et (ii) relèvent typiquement d'une détermination algorithmique. De préférence, ces étapes sont intégralement mises en oeuvre par ordinateur, tandis que l'étape (iii) peut être mise en oeuvre tant par ordinateur (par exemple, par un enregistrement des codes-barres sur des supports informatiques lisibles par ordinateurs) que sans ordinateur (par exemple, par une reproduction manuelle ou photographique des codes-barres), ou par des moyens mixtes (par exemple, au moyen d'un ordinateur connecté à une imprimante pour l'impression des codes-barres sur du papier). L'étape (iv) peut également être mise en œuvre par ordinateur (par exemple, dans le cas de l'enregistrement des codes-barres sur des serveurs distants qui induit *in fine* l'entrepôt des supports en les emplacements distincts - ceux des serveurs distants) ou sans ordinateur (par exemple, dans le cas de supports physiques qui sont simplement physiquement placés en lesdits emplacements, ce mode de réalisation étant préféré).

L'utilisation d'un ordinateur hors ligne (c'est-à-dire non connecté à un réseau informatique) est préférée afin de limiter les risques de piratage et de dépendance en un tiers (serveur tiers, etc.). Auquel cas, l'ordinateur dispose d'un programme exécutable afin de mettre en oeuvre hors ligne les étapes appropriées du procédé selon l'invention, à tout du moins les étapes (i) et (ii), et/ou leur inversion telle que présentée sous la forme des étapes (b) et (c) ci-après introduites.

Le procédé selon l'invention s'applique à toute phrase de mots, au-delà du contexte exposé dans l'art antérieur. Toutefois, l'utilisation du procédé lorsque la phrase consiste en une clé d'accès à des données numériques (cryptées) stockées dans une chaîne de blocs est préférée, en particulier si ces données sont associées à un compte de cryptomonnaies. Dans ce cas, la phrase est alors de préférence une « seed phrase ».

De préférence, les parties de la phrase générée à l'étape (i) sont au moins au nombre de 4, de préférence, elles sont au moins au nombre de 6. En effet, l'étape (i) est d'autant plus avantageuse en terme de décentralisation et de préservation contre la perte, la dégradation et/ou la destruction si un nombre suffisant de parties sont générées. L'étape (i) peut être implémentée par toute technique algorithmique appropriée et connue de l'homme du métier, par exemple, par un secret réparti, ou plus précisément par un partage de clé secrète de Shamir.

Il suit de l'énoncé du procédé selon l'invention que la quantité minimale est typiquement supérieure ou égale à 2. Ceci est sous-jacent au principe préféré de non-collusion de l'information contenue dans les parties qui permet d'éviter ou de limiter les risques que la phrase soit déterminée de manière non désirée par son propriétaire. Par exemple, la quantité minimale est d'au moins le tiers du nombre de parties, voire d'au moins la moitié du nombre de parties. Ainsi, il est nécessaire de disposer de suffisamment de parties de la phrase pour déterminer la phrase, ce qui rend le procédé plus sûr et décentralisé.

La quantité minimale est de préférence strictement plus petite que le nombre de parties. Ceci est sous-jacent au principe préféré de redondance de l'information contenue dans les parties. De cette façon, il n'est pas nécessaire de posséder toutes les parties pour déterminer la phrase, et la perte, dégradation, destruction ou défaillance d'une partie n'empêche pas de déterminer la phrase. Par exemple, la quantité minimale est au plus deux tiers du nombre de parties, ce qui donne davantage de liberté pour déterminer la phrase, tout en restant contraignant.

Des tels exemples pratiques de paires formées du nombre de parties, noté N, et de la quantité minimale sont (N, $\lceil N/3 \rceil$), (N, $\lfloor N/2 \rfloor$), (N, $\lceil N/2 \rceil$), (N, $\lfloor 2N/3 \rfloor$) où $\lfloor - \rfloor$ et $\lceil - \rceil$ désignent respectivement les opérateurs « partie entière inférieure » et « partie entière supérieure », pour N = 4, 5, 6, 7, 8, 9, 10, 11 ou 12, ces exemples étant non limitatifs.

L'étape (ii) peut être implémentée par les techniques appropriées et connues de l'homme du métier de correspondance entre une chaîne alphanumérique en un code-barre. Les codes-barres peuvent être uni ou multidimensionnels. En particulier, ils sont de préférence bidimensionnels et consistent, préférentiellement en des codes QR.

La forme matricielle des codes QR permet avantageusement d'enregistrer nombre d'informations. De plus, les codes QR sont largement connus du grand public et peuvent être lus aisément par tout dispositif électronique muni d'une application dédiée, sans nécessité de disposer de logiciel de décodage complexe et spécifique ou d'une connexion à un réseau informatique particulier.

Le procédé peut toutefois s'appliquer de façon équivalente avec d'autres systèmes de représentation symbolique de chaînes alphanumériques.

Dans le cadre de ce document, un support physique peut comprendre une feuille de papier sur laquelle est écrit un code-barre, un objet sur lequel est gravé ou écrit un code-barre, un support informatique lisible par ordinateur tel qu'une clé USB sur laquelle est enregistré un code-barre, etc. Ces exemples ne sont pas limitatifs. Dans le cadre de ce document, un support informatique est de préférence lisible par ordinateur et consiste en au moins un support de stockage d'informations de forme numérique. Il comprend, par exemple, au moins un parmi : une mémoire numérique, un serveur, une clé USB, un ordinateur. Il peut être dans un nuage de données (« *cloud* »).

Le terme « produire » à l'étape (iii) relève donc d'une signification générique couvrant, dans les exemples susmentionnés, l'écriture, la gravure, l'enregistrement numérique, etc. sans s'y limiter.

L'étape (iv) peut quant à elle être mise en oeuvre de diverses façons, et suit, dans certains cas, de l'étape (iii). Par exemple, lorsqu'un code-barre est enregistré (et donc produit) sur un nuage de données, celui-ci est nécessairement associé à un serveur hébergeant les données correspondantes du nuage de données. Dans ce cas, l'emplacement est celui du serveur. Lorsqu'un code-barre est enregistré sur le disque dur d'un téléphone intelligent du propriétaire de la phrase, l'emplacement est défini par l'emplacement du téléphone intelligent. Lorsque différents supports informatiques sont utilisés, ils sont de préférence sans connexion entre eux, et en particulier sans connexion qui permette un échange de données.

Le terme « emplacement » réfère de préférence à une position physique d'un support. De préférence, les supports sont physiques, accessibles physiquement pour le propriétaire de la phrase, et ils sont spécifiquement et physiquement placés à l'étape (iv) à distance l'un de l'autre, dans leurs emplacements respectifs. De préférence, ceux-ci sont espacés deux à deux d'au moins un mètre. Ils peuvent par exemple être définis par des pièces d'une habitation du propriétaire de la phrase. Les emplacements sont de préférence dans un rayon d'au plus 100 km, et plus préférentiellement au plus 20 km autour d'un point de l'espace.

Les emplacements peuvent aussi constituer en différentes habitations de tiers ou emplacement connus de tiers auxquels le propriétaire de la phrase aurait remis un support. De cette façon, chaque tiers ne dispose pas d'assez d'information sur le ou les supports qu'il possède pour déterminer la phrase, et celle-ci peut être déterminée si un certains nombre de tiers (et éventuellement le propriétaire) se réunissent de façon à posséder au moins la quantité minimale de parties.

Dans un tel cas, de préférence, les codes-barres produits sur les supports fournis aux tiers sont, en nombre, au plus égal à la quantité minimale, de sorte que, les tiers ne sont pas en mesure de déterminer la phrase même en se regroupant ensemble, ou bien tous les tiers doivent être réunis pour déterminer la phrase. Par exemple, dans le cas où le nombre de parties est 6 et la quantité minimale 3, le propriétaire de la phrase peut confier un support comprenant un seul code-barre à chacun parmi trois tiers, et entreposer trois autres supports comprenant chacun un seul code-barre à trois emplacements connus de lui seul. De cette façon, il garde un contrôle total sur l'accès phrase. Une telle configuration peut également être utile en cas de décès du propriétaire car elle permet aux tiers de déterminer la phrase s'ils y sont invités (par exemple, via un testament).

L'usage, dans ce document, du verbe « comprendre », de ses variantes ou conjugaisons, n'exclut pas la présence d'éléments autres que ceux mentionnés. De façon semblable, l'usage de l'article indéfini « un », « une », ou de l'article défini « le », « la » ou « l' », pour introduire un élément n'exclut pas la présence d'une pluralité de ces éléments.

Selon un mode de réalisation du procédé, chaque code-barre est produit une seule fois à l'étape (iii). De cette façon, les risques de vol sont limités, de même que les risques de confusion entre les parties identiques ou différentes, sans pour autant accroître les risques en termes de perte d'accès à la phrase par perte, destruction ou dégradation des supports si la quantité minimale est suffisamment inférieure au nombre de parties.

Selon un autre mode de réalisation du procédé, au moins un des codes-barres est produit sur plusieurs supports distincts, chacun de ces supports étant entreposé dans un des emplacements distinct. Ce mode de réalisation permet d'augmenter le nombre de possibilités pour distribuer les supports entre les emplacements tout en diminuant davantage le risque de perte d'accès à la phrase par perte, destruction ou dégradation des supports vu que plusieurs supports donnent accès à la même partie de phrase. Ce mode de réalisation permet ainsi une redondance d'information correspondant aux parties de la phrase.

Selon un mode de réalisation du procédé, chacun des supports comprend un (et un) seul des codes-barres. Selon un mode de réalisation du procédé, chacun des emplacements comprend un (et un) seul des supports. Ces deux réalisations permettent de distribuer de façon contrôlée et homogène les accès aux parties de la phrase en différents emplacements.

Le procédé s'applique à toute phrase d'au moins deux mots.

La phrase de mots est généralement représentée numériquement par des bits. Le procédé comprend de préférence l'étape suivante précédant l'étape (i) si le nombre de bits de la phrase est strictement plus petit qu'un seuil fixé : compléter la phrase par un ou plusieurs mots additionnels de sorte qu'elle soit représentée par au moins ce seuil de bits.

Cette étape additionnelle permet avantageusement d'opérer avec une phrase ayant suffisamment d'entropie, et donc plus complexe à pirater, voler ou reproduire. Elle est typiquement mise en oeuvre par le propriétaire de la phase, par exemple suite à une sollicitation émanant d'une interface électronique d'un ordinateur avant l'exécution de l'étape (i). De préférence, la phrase comprend 12, 18 ou 24 mots, et chacun est par exemple représenté par un même nombre de bits, par exemple 11 bits (correspondant à 2048 choix par mots). Plus préférentiellement, la phrase est normalisée en format BIP39 et/ou l'étape additionnelle susdite correspond à une normalisation de la phrase dans ce format. De préférence, ledit seuil est d'au moins 132 bits, plus préférentiellement il est de 264 bits (correspondant à 24 mots de 11 bits, d'une entropie de 256 bits avec un checksum de 8 bits).

De préférence, chacune des parties de la phase présente une ou plusieurs des caractéristiques techniques susdites relatives à la phrase. De préférence, les parties également sont normalisées en format BIP39.

Selon une variante, le procédé comprend en outre l'étape suivante précédant l'étape (i) : horodater la phrase. L'horodatage permet au propriétaire de la phrase d'éviter des doublons ou des confusions éventuelles dans l'exécution du procédé. Ceci peut notamment se produire s'il modifie ou corrige la phrase et puis permute la phrase d'origine et la phrase modifiée ou corrigée, ou s'il cryptographie plusieurs phrases différentes dans un court laps de temps.

Selon une variante, le procédé comprend également l'étape suivante entre les étapes (i) et (ii) : horodater chacune des parties de la phrase. Ceci présente des avantages similaires à l'horodatage de la phrase, et permet en particulier d'éviter de mélanger des parties de différentes phrases dans l'exécution du procédé.

L'horodatage dans les deux variantes susdites est préférentiellement effectué à la milliseconde près.

Selon une variante, le procédé comprend en outre l'étape suivante entre les étapes (i) et (ii) : chiffrer chacune des parties de la phrase, qui sont de préférence au préalable horodatées le cas échéant. Le chiffrement est de préférence mis en oeuvre au moyen d'une clé de chiffrement symétrique. Il consiste de préférence en un chiffrement AES, et la clé de chiffrement comprend de préférence au moins 256 bits. Avantageusement, dans ce dernier cas, le chiffrement est résistant d'un point de vue quantique (dit « *quantum safe* »).

Un tel chiffrement renforce la sécurité du procédé vu que ce dernier combine alors trois techniques cryptographiques différentes. Il permet au propriétaire de la phrase de conserver un contrôle total sur le procédé s'il est seul en possession de la clé de (dé)chiffrement. Ainsi, même si des tiers rassemblent des supports de sorte que les codes-barres produits sur ces supports sont, en nombre, au moins la quantité minimale, ils ne peuvent de toute façon pas déterminer la phrase sans cette clé de (dé)chiffrement.

La clé de (dé)chiffrement peut être générée et/ou stockée au moyen d'un module informatique pour plus de sécurité. Par exemple, il peut être prévu que le module informatique délivre la clé de (dé)chiffrement sur base d'une identification du propriétaire de la phrase, typiquement via une technique d'identification et/ou d'authentification forte du propriétaire (par exemple, par lecture d'une carte d'identité électronique ou d'un document semblable). Le module informatique peut faire partie intégrante d'un système informatique tiers.

Le ou les horodatages et/ou le chiffrement susdits sont de préférence mis en oeuvre intégralement par ordinateur.

Selon un mode de réalisation de l'invention, le procédé comprend en outre, après l'étape (iv), l'étape suivante :

(v) stocker sur un support informatique tiers des informations sur au moins un des emplacements et/ou des supports, des données de contact d'une personne tierce, et au moins une condition à laquelle ces informations peuvent être transférées à cette personne tierce au moyen des données de contact. De préférence, il comprend aussi, après l'étape (v), l'étape suivante :

(vi) transférer à la personne tierce lesdites informations lorsque la condition est satisfaite.

Ce mode de réalisation est avantageux car il prévoit la gestion ultérieure de la phrase cryptographiée par le procédé. Par exemple, grâce aux étapes (v) et (vi) le propriétaire de la phrase peut prévoir de communiquer à ses héritiers (la ou les personnes tierces dans ce cas) les emplacements ou les détenteurs des supports (les informations dans ce cas) pour qu'ils puissent déterminer la phrase en cas de décès du propriétaire (la condition dans ce cas), mais pas avant.

Ce mode de réalisation n'est pas limité au cas de l'héritage du propriétaire mais peut concerner toute autre condition, par exemple une condition médicale du propriétaire de la phrase, ou généralement tout type d'événement déclencheur. Un laps de temps relativement important peut s'écouler entre une exécution de l'étape (v) et une exécution de l'étape (vi), notamment compte tenu de la nature de la condition. De même, l'étape (v) peut tout à fait être exécutée un grand laps de temps après l'étape (iv).

Le support informatique tiers est de préférence celui comprenant le module informatique de génération et/ou de stockage de la clé de (dé)chiffrement pour les modes de réalisation de l'invention correspondant. Dans ce cas, il peut être prévu que la clé de (dé)chiffrement soit délivrée à la personne tierce avec les informations susdites. Cela permet à la personne tierce de déterminer la phrase si c'est le but des informations.

L'étape (vi) est optionnellement exécutée sous réserve d'une identification de la personne tierce (par exemple, par lecture de sa carte d'identité) auprès d'un système informatique tiers auquel appartient le support informatique tiers.

L'étape (vi) est de préférence exécutée sur base d'un transfert préalable au système informatique d'une preuve que la condition est satisfaite. Ce transfert peut se faire activement, par la personne tierce par exemple, mais peut aussi être effectué automatiquement et/ou algorithmiquement si le système informatique tiers est configuré pour accéder en ligne à des données relatives à la condition, voire même pour exécuter automatiquement et/ou algorithmiquement l'étape (vi). C'est par exemple le cas si le système informatique tiers est distribué et/ou se présente sous la forme d'une chaîne de blocs configuré pour accéder, de préférence en ligne, à des données relatives à la condition et pour exécuter algorithmiquement l'étape (vi), par exemple par exécution de contrats intelligents programmés dans la chaîne de blocs. Les termes du contrat peuvent alors implémenter la condition si elle est de nature à le permettre (par exemple, un décès, une date, un évènement public notable, ...) et le transfert des informations de façon algorithmique sans intervention humaine intermédiaire. Les étapes (v) et (vi) sont alors typiquement exécutées en ligne, sans néanmoins s'opposer à ce que les autres étapes (i) à (iv) du procédé soient exécutées hors ligne. Ces modes de réalisations préférés n'excluent pas du cadre de l'invention le cas où les étapes (v) et/ou (vi) se feraient hors ligne.

L'invention propose aussi un procédé de détermination d'une phrase de mots cryptographiée au moyen du procédé selon l'invention, le procédé de détermination étant mis en oeuvre par ordinateur et comprenant les étapes suivantes :

(a) collecter des supports sur lesquels sont produits des codes-barres encodant au moins la quantité minimale de parties ;

(b) lire les codes-barres produits sur les supports rassemblés à l'étape (a) de façon à les décoder sous forme de parties de la phrase ;

(c) déterminer la phrase à partir des parties issues de la lecture de l'étape (b).

Ce procédé de détermination permet d'inverser le procédé de cryptographie selon l'invention, de sorte que les avantages de ce dernier se transposent *mutatis mutandis* à ce premier. Les étapes (b) et (c) sont de préférence totalement mises en oeuvre par ordinateur, tandis que l'étape (a) peut être mise en oeuvre ou non par ordinateur semblablement à l'étape (iv).

Le procédé de détermination selon l'invention est typiquement mis en oeuvre à la suite du procédé de cryptographie selon l'invention, de sorte que les étapes (a) à (c) peuvent être considérées de façon équivalente comme des étapes optionnelles au procédé de cryptographie qui suivent les étapes (i) à (iv).

Dans le cas où du mode de réalisation pour lequel les parties de la phrase décodée à l'étape (b) sont en outre chiffrées, l'étape (c) comprend une sous-étape de déchiffrement des parties chiffrées.

La lecture des codes-barres à l'étape (b) se fait typiquement par balayage, par exemple un scan, ou lecture photographique. Une telle lecture est aisée. Elle peut se faire au moyen d'un dispositif électronique approprié à cet usage connu d'un homme du métier, par exemple un téléphone intelligent qui peut être muni d'une application numérique adaptée. Généralement, un tel dispositif électronique comprend une caméra ou un lecteur optique pour la lecture du code-barre.

La présente invention propose également :

- un système informatique de traitement de données comprenant des moyens configurés pour mettre en oeuvre le procédé de cryptographie et/ou de détermination selon l'invention ;
- un programme d'ordinateur comprenant des instructions qui, lorsque le programme d'ordinateur est exécuté par un ordinateur, conduisent celui-ci à mettre en oeuvre le procédé de cryptographie et/ou de détermination selon l'invention ;
- un support informatique lisible par un ordinateur, et sur lequel est enregistré le programme d'ordinateur susdit.

Les étapes des procédés respectifs mises en oeuvre via le système informatique et le programme d'ordinateur comprennent à tout du moins les étapes (i) et (ii), et/ou (b) et (c).

Le programme d'ordinateur est de préférence prévu pour être exécuté hors ligne, sans dépendance tierce. Le support informatique sur lequel il est enregistré peut ainsi être fourni à un propriétaire d'une phrase de mots pour qu'il exécute le programme sur un ordinateur déconnecté de tout réseau informatique. Le risque de piratage est ainsi limité et le propriétaire a plus de certitudes sur l'intégrité du programme (par exemple, qu'il ne peut prévoir l'envoi d'une copie de la clé sur un serveur tiers à l'insu du propriétaire).

Le système informatique comprend, par exemple, un hardware ou un matériel informatique parmi :

- un ordinateur muni d'un processeur pour exécuter des algorithmes, de préférence d'une architecture de type PC ou d'une architecture de type embarqué (ARM) ;
- un circuit intégré ASIC spécifique à une application et/ou à un algorithme ;
- un circuit intégré (logique) du type FPGA, qui est typiquement reconfigurable ou reprogrammable après fabrication.

Cet hardware ou matériel informatique permet à tout du moins de mettre en oeuvre les étapes (i), (ii), (b) et (c) des procédés susdits, et optionnellement les étapes (iii), (iv) et (a) de ces procédés. Le système informatique peut en outre comprendre un autre matériel informatique tel qu'une imprimante ou un outil d'usinage connecté à un ordinateur tel que susdit pour recevoir des instructions de production des codes-barres sur les supports à l'étape (iii).

Les modes de réalisation et les avantages des procédés selon l'invention se transposent *mutatis mutandis* au système informatique de traitement de données, au programme d'ordinateur et au support informatique lisible par ordinateur selon l'invention.

**Brève description des figures**

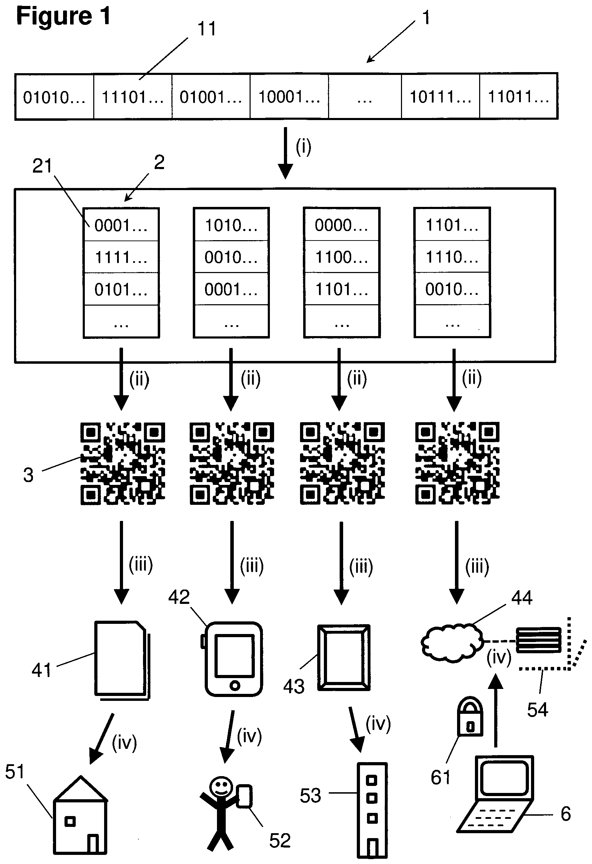

D'autres caractéristiques et avantages de la présente invention apparaîtront à la lecture de la description qui suit pour la compréhension de laquelle, il sera fait référence à la figure 1 représentant un organigramme du procédé selon un mode de réalisation de l'invention.

Les dessins de la figure ne sont pas à l'échelle. Les éléments identiques et/ou semblables peuvent porter les mêmes références et/ou des références semblables. La présence de numéros ou lettres de référence aux dessins n'est pas limitative, y compris lorsque ces numéros ou lettres sont indiqués dans les revendications.

**Description d'un mode de réalisation de l'invention**

Il est introduit ci-après une description d'un mode de réalisation de l'invention au regard de la figure 1. Celle-ci est schématique et ne limite pas l'invention.

La figure 1 représente une exécution d'un mode de réalisation du procédé de cryptographie d'une phrase 1 de mots 11 selon l'invention. La phrase 1 se présente sous la forme de 24 mots de 11 bits et peut être normalisée en format BIP39 de sorte qu'elle a une entropie de 256 bits. Il s'agit par exemple d'une « *seedphrase* » privée de récupération de clés privées donnant accès à des données numériques stockées dans une chaîne de blocs et associées à un compte de cryptomonnaies.

À l'étape (i), un algorithme de partage de clé secrète de Shamir est exécutée sur base de la phrase 1 de façon à la diviser en plusieurs parties 2 distinctes, par exemple au moins quatre parties, sans que toutes ces parties 2 soient toutefois nécessaires pour reconstituer la phrase 1. Une quantité minimale de ces parties 2, par exemple entre 40 et 60%, est suffisante pour déterminer algorithmiquement la phrase 1 selon les techniques algorithmiques connues de l'homme du métier. Une seule partie 2 ne suffit pas à cet effet. La quantité minimale est par exemple de 2 si le nombre de parties 2 est de 4.

Chacune des parties 2 de la phrase 1 comprend également plusieurs mots 21 représentés sous forme de bits. Les mots 21 peuvent être représentés par un même nombre de bits et les parties 2 comprendre le même nombre de mots 21 afin de rendre le procédé plus homogène. Les parties 2 peuvent être aussi normalisées en format BIP39. Il peut leur être appliqué un horodatage et/ou un chiffrement comme décrit dans l'exposé de l'invention.

À l'étape (ii), chacune des parties 2 (au préalable éventuellement horodatée et/ou chiffrée) est codée sous la forme d'un code-barre 3, plus précisément un code QR, de sorte que chaque code-barre 3 correspond de façon univoque à une des parties 2 de la phrase 1. Les codes-barres 3 sont ensuite produits en un seul exemplaire à l'étape (iii) sur des supports 41-44 physiques et/ou informatiques distincts, et de préférence natures variées, ce qui rend la détermination de la phrase d'autant plus complexe pour un tiers. La figure 1 illustre des exemples de tels supports 41-44 :

- un premier code-barre 3 est imprimé sur une feuille de papier 41,
- un deuxième code-barre 3 est enregistré en format numérique sur la mémoire 42 d'un téléphone intelligent du propriétaire de la phase 1,
- un troisième code-barre 3 est gravé sur le cadre 43 d'un tableau, et
- un quatrième code-barre 3 est stocké dans un nuage de données 44.

Enfin, à l'étape (iv), chacun de ces supports 41-44 est entreposé séparément dans un emplacement 51-54 distinct des autres. Comme le code-barre 3 sur un seul des supports 41-44 ne suffit pas pour déterminer la phrase, un tiers découvrant aléatoirement un des emplacements 51-54 ne pourra pas déterminer la phrase 1. De même, la perte, destruction, détérioration ou défaillance d'un des supports 41-44 (et/ou un des emplacements 51-54) n'empêche pas de déterminer la phrase 1 à partir des autres supports 41-44 car toutes les parties 2 ne sont pas nécessaires à cet effet. La figure 1 illustre des exemples de tels emplacements 51-54 :

- la feuille de papier 41 est par exemple entreposée dans un coffre d'une maison 51 du propriétaire de la phrase 1 ;
- la mémoire 42 du téléphone intelligent du propriétaire de la phase 1 est a *fortiori* entreposée avec le téléphone intelligent, dans l'emplacement 52 dans lequel il se trouve, par exemple, avec le propriétaire de la phrase 1 ;
- le tableau comprenant le cadre 43 servant de support au troisième code-barre 3 est par exemple entreposée dans un appartement 53 d'un tiers, par exemple un membre de la famille du propriétaire de la phrase 1 ;
- le nuage de données 44 est a *fortiori* entreposé avec un serveur tiers distant auquel il est associé, dans l'emplacement 54 de ce serveur, par exemple dans une salle de serveurs.

Comme il ressort des exemples d'emplacements 52 et 54, l'étape d'entrepôt des supports peut suivre directement de la nature informatique de ces supports. Un support informatique peut toutefois être entreposé physiquement à l'étape (iv). Par exemple, une clé USB sur laquelle est enregistré un des codes-barres 3 peut être spécifiquement stockée dans un coffre ou chez un tiers.

Dans le cas d'un nuage de données 44 comme support, comme celui-ci est nécessairement accessible par réseau, afin de limiter l'accès au code-barre 3 par un ordinateur 6 quelconque de tiers et de réduire les risques de piratage du code-barre 3, il peut être prévu de chiffrer les données du code-barre 3 de façon à n'y accéder que par une clé de déchiffrement 61.

En bref, l'invention concerne un procédé de cryptographie d'une phrase 1 de mots 11 comprenant la génération de parties 2 de la phrase 1, le codage de celles-ci sous une forme de codes-barres 3, la production de ces codes-barres 3 sur des supports physiques et/ou informatiques 41-44, et la dissémination de ces supports 41-44 en plusieurs emplacements 51-54. L'invention concerne aussi un procédé de détermination d'une phrase 1 de mots 11 cryptographiée au moyen du procédé de cryptographie susmentionné.

La présente invention a été décrite ci-dessus en relation avec des modes de réalisations spécifiques, qui ont une valeur purement illustrative et ne doivent pas être considérés comme limitatifs. Il apparaîtra directement pour l'homme du métier que l'invention n'est pas limitée aux exemples illustrés ou décrits ci-dessus, et que sa portée est plus largement définie par les revendications ci-après introduites.

## Revendications

1. Procédé de cryptographie d'une phrase (1) de mots (11) mis en oeuvre par ordinateur et comprenant les étapes suivantes :

(i) générer algorithmiquement une pluralité de parties (2) de la phrase (1) telles que la phrase (1) soit déterminable à partir d'une quantité minimale de ces parties (2) ;
(ii) coder chacune des parties (2) sous forme d'un code-barre (3) ;
(iii) produire les codes-barres (3) sur des supports (41-44) physiques et/ou informatiques ;
(iv) entreposer les supports (41-44) en plusieurs emplacements (51-54), de telle sorte que le ou les codes-barres (3) produits sur le ou les supports (41-44) entreposés en chacun des emplacements (51-54) sont, en nombre, strictement inférieur à la quantité minimale.

2. Procédé selon la revendication 1, dans lequel chaque code-barre (3) est produit une seule fois à l'étape (iii).

3. Procédé selon la revendication 1, dans lequel au moins un des codes-barres (3) est produit sur plusieurs supports distincts, chacun de ces supports étant entreposé dans un des emplacements.

4. Procédé selon l'une quelconque des revendications précédentes, dans lequel chacun des supports (41-44) comprend un et un seul des codes-barres (3) et chacun des emplacements (51-54) comprend un et un seul des supports (41-44).

5. Procédé selon l'une quelconque des revendications précédentes, dans lequel la phrase (1) est représentée par un nombre de bits, et dans lequel le procédé comprend en outre l'étape suivante précédant l'étape (i) si le nombre de bits est strictement plus petit qu'un seuil fixé : compléter la phrase (1) par un ou plusieurs mots (11) additionnels de sorte qu'elle soit représentée par au moins ce seuil de bits.

6. Procédé selon l'une quelconque des revendications précédentes, dans lequel la quantité minimal est strictement inférieure au nombre de parties (2).

7. Procédé selon l'une quelconque des revendications précédentes, dans lequel les codes-barres (3) sont des codes QR.

8. Procédé selon l'une quelconque des revendications précédentes, comprenant en outre l'étape suivante précédant l'étape (i) : horodater la phrase (1).

9. Procédé selon l'une quelconque des revendications précédentes, comprenant en outre l'étape suivante entre les étapes (i) et (ii) : horodater et/ou chiffrer chacune des parties (2).

10. Procédé selon la revendication 9, dans lequel chacune des parties (2) est chiffrée au moyen d'une clé de chiffrement symétrique générée et/ou stockée au moyen d'un module informatique.

**11.** Procédé selon l'une quelconque des revendications précédentes, comprenant en outre les étapes suivantes après l'étape (iv) :

(v) stocker sur un support informatique tiers des informations sur au moins un des emplacements (51-54) et/ou des supports (41-44), des données de contact d'une personne tierce, et au moins une condition à laquelle ces informations peuvent être transférées à cette personne tierce au moyen des données de contact ;

(vi) transférer à la personne tierce les informations lorsque la condition est satisfaite.

**12.** Procédé selon la revendication 11, dans lequel le support informatique tiers appartient à un système informatique tiers distribué se présentant sous la forme d'une chaîne de blocs et configuré à la fois pour accéder en ligne à des données relatives à la condition et pour exécuter algorithmiquement l'étape (vi), et

dans lequel l'étape (vi) est exécutée par ledit système informatique tiers distribué.

**13.** Procédé de détermination d'une phrase (1) de mots (11) cryptographiée au moyen du procédé de cryptographie selon l'une quelconque des revendications précédentes, le procédé de détermination étant mis en oeuvre par ordinateur et comprenant les étapes suivantes :

(a) collecter des supports (41-44) sur lesquels sont produits des codes-barres (3) encodant au moins la quantité minimale de parties (2) ;

(b) lire les codes-barres (3) produits sur les supports (41-44) rassemblés à l'étape (a) de façon à les décoder sous forme de parties (2) de la phrase (1) ;

(c) déterminer la phrase (1) à partir des parties (2) issues de la lecture de l'étape (b).

**14.** Procédé selon l'une quelconque des revendications 1 à 11 ou 13 mis en oeuvre par un ordinateur hors ligne.

**15.** Procédé selon l'une quelconque des revendications précédentes, dans lequel la phrase (1) consiste en une clé d'accès à des données numériques stockées dans une chaîne de blocs.

**16.** Système informatique de traitement de données comprenant des moyens configurés pour mettre en oeuvre le procédé selon l'une quelconque des revendications précédentes.

**17.** Support informatique lisible par un ordinateur sur lequel est enregistré un programme d'ordinateur comprenant des instructions qui, lorsque le programme d'ordinateur est exécuté par un ordinateur, conduisent celui-ci à mettre en oeuvre le procédé selon l'une quelconque des revendications précédentes.

**Revendications modifiées conformément à la règle 137(2) CBE.**

**1.** Procédé de cryptographie d'une phrase (1) de mots (11) mis en oeuvre par ordinateur et comprenant les étapes suivantes :

(i) générer algorithmiquement une pluralité de parties (2) de la phrase (1) telles que la phrase (1) soit déterminable à partir d'une quantité minimale de ces parties (2) ;

(ii) coder chacune des parties (2) sous forme d'un code-barre (3) ;

(iii) produire les codes-barres (3) sur des supports (41-44) physiques et/ou informatiques ;

(iv) entreposer les supports (41-44) en plusieurs emplacements (51-54), de telle sorte que le ou les codes-barres (3) produits sur le ou les supports (41-44) entreposés en chacun des emplacements (51-54) sont, en nombre, strictement inférieur à la quantité minimale.

**2.** Procédé selon la revendication 1, dans lequel chaque code-barre (3) est produit une seule fois à l'étape (iii).

**3.** Procédé selon la revendication 1, dans lequel au moins un des codes-barres (3) est produit sur plusieurs supports distincts, chacun de ces supports étant entreposé dans un des emplacements.

**4.** Procédé selon l'une quelconque des revendications précédentes, dans lequel chacun des supports (41-44) comprend un et un seul des codes-barres (3) et chacun des emplacements (51-54) comprend un et un seul des supports (41-44).

**5.** Procédé selon l'une quelconque des revendications précédentes, dans lequel la phrase (1) est représentée par un nombre de bits, et dans lequel le procédé comprend en outre l'étape suivante précédant l'étape (i) si le nombre de bits est strictement plus petit qu'un seuil fixé : compléter la phrase (1) par un ou plusieurs mots (11) additionnels de sorte qu'elle soit représentée par au moins ce seuil de bits.

**6.** Procédé selon l'une quelconque des revendications précédentes, dans lequel la quantité minimal est strictement inférieure au nombre de parties (2).

**7.** Procédé selon l'une quelconque des revendications précédentes, dans lequel les codes-barres (3) sont des codes QR.

**8.** Procédé selon l'une quelconque des revendications précédentes, comprenant en outre l'étape suivante précédant l'étape (i) : horodater la phrase (1).

**9.** Procédé selon l'une quelconque des revendications précédentes, comprenant en outre l'étape suivante entre les étapes (i) et (ii) : horodater et/ou chiffrer chacune des parties (2).

**10.** Procédé selon la revendication 9, dans lequel chacune des parties (2) est chiffrée au moyen d'une clé de chiffrement symétrique générée et/ou stockée au moyen d'un module informatique.

**11.** Procédé selon l'une quelconque des revendications précédentes, comprenant en outre les étapes suivantes après l'étape (iv) :

> (v) stocker sur un support informatique tiers des informations sur au moins un des emplacements (51-54) et/ou des supports (41-44), des données de contact d'une personne tierce, et au moins une condition à laquelle ces informations peuvent être transférées à cette personne tierce au moyen des données de contact ;
> (vi) transférer à la personne tierce les informations lorsque la condition est satisfaite.

**12.** Procédé selon la revendication 11, dans lequel le support informatique tiers appartient à un système informatique tiers distribué se présentant sous la forme d'une chaîne de blocs et configuré à la fois pour accéder en ligne à des données relatives à la condition et pour exécuter algorithmiquement l'étape (vi), et

> dans lequel l'étape (vi) est exécutée par ledit système informatique tiers distribué.

**13.** Procédé de détermination d'une phrase (1) de mots (11) cryptographiée au moyen du procédé de cryptographie selon l'une quelconque des revendications précédentes, le procédé de détermination étant mis en oeuvre par ordinateur et comprenant les étapes suivantes :

> (a) collecter des supports (41-44) sur lesquels sont produits des codes-barres (3) encodant au moins la quantité minimale de parties (2) ;
> (b) lire les codes-barres (3) produits sur les supports (41-44) rassemblés à l'étape (a) de façon à les décoder sous forme de parties (2) de la phrase (1) ;
> (c) déterminer la phrase (1) à partir des parties (2) issues de la lecture de l'étape (b).

**14.** Procédé selon l'une quelconque des revendications 1 à 11 ou 13 mis en oeuvre par un ordinateur hors ligne.

**15.** Procédé selon l'une quelconque des revendications précédentes, dans lequel la phrase (1) consiste en une clé d'accès à des données numériques stockées dans une chaîne de blocs.

**16.** Système informatique de traitement de données comprenant des moyens configurés pour mettre en oeuvre au moins les étapes (i) et (ii) du procédé selon l'une quelconque des revendications 1 à 12, 14 ou 15, et/ou au moins les étapes (b) et (c) du procédé selon l'une quelconque des revendications 13 à 15.

**17.** Support informatique lisible par un ordinateur sur lequel est enregistré un programme d'ordinateur comprenant des instructions qui, lorsque le programme d'ordinateur est exécuté par un ordinateur, conduisent celui-ci à mettre en oeuvre au moins les étapes (i) et (ii) du procédé selon l'une quelconque des revendications 1 à 12, 14 ou 15, et/ou au moins les étapes (b) et (c) du procédé selon l'une quelconque des revendications 13 à 15.

# Figure 1

Europäisches
Patentamt

European
Patent Office

Office européen
des brevets

# RAPPORT DE RECHERCHE EUROPEENNE

Numéro de la demande

**EP 23 07 5002**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 654 578 A1 (SAFETECH BVBA [BE]) 20 mai 2020 (2020-05-20) | 1-17 | INV. H04L9/08 |
| Y | * alinéas [0010], [0019], [0020], [0022], [0036]; figure 1 * | 1-17 | |
| Y | DI NICOLA VINCENZO ET AL: "Resilient Custody of Crypto-Assets, and Threshold Multisignatures", MATHEMATICS, vol. 8, no. 10, 14 octobre 2020 (2020-10-14), page 1773, XP055809360, ISSN: 2227-7390, DOI: 10.3390/math8101773 * page 4 * | 1-17 | |

DOMAINES TECHNIQUES RECHERCHES (IPC)

**H04L**

Le présent rapport a été établi pour toutes les revendications

| Lieu de la recherche | Date d'achèvement de la recherche | Examinateur |
|---|---|---|
| Munich | 9 janvier 2024 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)

**EP 4 498 635 A1**

## ANNEXE AU RAPPORT DE RECHERCHE EUROPEENNE
## RELATIF A LA DEMANDE DE BREVET EUROPEEN NO.

EP 23 07 5002

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09−01−2024

| Document brevet cité au rapport de recherche | Date de publication | Membre(s) de la famille de brevet(s) | Date de publication |
|---|---|---|---|
| EP 3654578 A1 | 20−05−2020 | CN 111199045 A | 26−05−2020 |
| | | EP 3654578 A1 | 20−05−2020 |
| | | US 2020162246 A1 | 21−05−2020 |

Pour tout renseignement concernant cette annexe : voir Journal Officiel de l'Office européen des brevets, No.12/82